# EUROPÄISCHE PATENTANMELDUNG

(11) **EP 3 839 226 A1**
(43) Veröffentlichungstag der Anmeldung: **23.06.2021**
(21) Anmeldenummer: 19218852.2
(22) Anmeldetag: 20.12.2019
(51) Int. Cl.: F02B 37/00, F02B 37/013, F02B 37/16, F02B 37/18, F02D 19/02, F02D 19/06, F02D 41/00, F02D 13/02, F02B 29/04

(54) **GEMISCHZUFÜHRSYSTEM FÜR EINEN VERBRENNUNGSMOTOR MIT QUANTITATIVER GEMISCHREGELUNG**

(71) Anmelder: ABB Schweiz AG, 5400 Baden (CH)
(72) Erfinder: Ryser, Raphael, 5400 Baden (CH)
(74) Vertreter: Zimmermann & Partner Patentanwälte mbB

(57) **Zusammenfassung**

Ein Gemischzuführsystem für einen Verbrennungsmotor mit quantitativer Gemischregelung wird hierin beschrieben. Das Gemischzuführsystem weist ein mit dem Verbrennungsmotor verbindbares Aufladesystem, aufweisend einen Bypass und ein im Bypass angeordnetes Bypassventil, und einen Ventiltrieb zur periodischen Betätigung eines Einlassventils des Verbrennungsmotors auf. Eine Ventilsteuerzeit des Einlassventils ist durch den Ventiltrieb steuerbar. Das Gemischzuführsystem ist dazu eingerichtet, bei einem Anstieg einer Motorlast das Bypassventil mindestens teilweise zu schließen und die Ventilsteuerzeit für eine Verlängerung der Ventilöffnungsdauer zu verändern, und während und/oder nach Ablauf einer Ventiltrieblatenzzeit das Bypassventil mindestens teilweise zu öffnen und/oder bei einer Verringerung der Motorlast das Bypassventil mindestens teilweise zu öffnen und die Ventilsteuerzeit für eine Verkürzung der Ventilöffnungsdauer zu verändern, und während und/oder nach Ablauf einer Ventiltrieblatenzzeit das Bypassventil mindestens teilweise zu schließen. Weiterhin wird ein Verfahren zum Betreiben eines Gemischzuführsystems für einen Verbrennungsmotor mit quantitativer Gemischregelung beschrieben.

## Beschreibung

### Technisches Gebiet

Die Erfindung betrifft ein Gemischzuführsystem für einen Verbrennungsmotor mit quantitativer Gemischregelung, und ein Verfahren zum Betreiben eines Gemischzuführsystems für einen Verbrennungsmotor mit quantitativer Gemischregelung.

### Hintergrund

Verbrennungsmotoren, insbesondere Gas- und Zweistoffbetriebmotoren nach dem Otto-Kreisprozess arbeiten in einem definierten Bereich eines Luftüberschussverhältnisses. Die Betriebsgrenzen oder physikalischen Grenzen sind gegeben durch instabile Zündung bei hohen Luftüberschussverhältnissen und unkontrollierte Verbrennung durch Phänomene wie Selbstzündung und Klopfen bei niedrigen Luftüberschussverhältnissen. Darüber hinaus begrenzen die Emissionsvorschriften den Grenzwert für die maximalen Luftüberschussverhältnisse.

Aus diesen Gründen bedarf es einer kontrollierten Einstellung des Luftüberschussverhältnisses in den Zylindern von Verbrennungsmotoren, sowohl während eines Intervalls, in dem eine Motorlast konstant ist, als auch bei Veränderungen, insbesondere abrupte Veränderungen, der Motorlast. Aus dem Stand der Technik ist es bekannt die Befüllung der Zylinder durch die Einstellung des Förderdrucks des Luftstroms (oder Gemischstroms) zu regeln. Eine Alternative hierzu ist es die Befüllung der Zylinder über das Einlassventil zu steuern.

Die Einstellung des Förderdrucks erfolgt beispielsweise über eine Drosselklappe im Luftweg (oder Gemischweg), und durch Bereitstellung eines Aufladesystem, aufweisend einen Turbolader und eine oder mehrere Bypasskonfigurationen, d.h. über eine Regelung des Turboladerdrucks.

Die Systeme basierend auf der Einstellung des Förderdrucks mittels Bypässen erzeugen Verluste, entweder durch Dissipation der Strömungsenergie in der Drosselklappe oder durch Verschwendung von Enthalpie auf einer Turbinenseite des Turboladers oder Rezirkulationsverluste auf einer Verdichterseite des Turboladers. Eine Alternative hierzu basiert auf der variablen Turbinengeometrie (VTG), die jedoch unter einem reduzierten Wirkungsgrad leidet, technisch komplex und kostenintensiv ist.

Die Befüllung der Zylinder über das Einlassventil wird häufig gesteuert in dem der Schließzeitpunkt des Einlassventils variiert wird. Beispielsweise offenbart WO 2008/000899 A1 eine Steueranordnung für ein Gaswechselventil in einem Kolbenmotor. Hierbei wird ein Hydraulikmedium zum Verzögern des Schließens des Ventils bereitgestellt.

Einige dieser Systeme können eine teilweise oder vollständige Variabilität der Zeitsteuerung des Einlassventils bieten, jedoch nicht mit der erforderlichen Schnelligkeit, wie sie für die Steuerung von Luftüberschussverhältnissen benötigt werden. Vorrichtungen zum Steuern des Schließzeitpunkts des Einlassventils haben daher den Nachteil, dass sie häufig langsam und träge sind oder dass schnell reagierende Systeme sehr aufwendig und kostenintensiv sind.

Angesichts des vorstehend Erwähnten besteht ein Bedarf an einem verbesserten Gemischzuführsystem für einen Verbrennungsmotor.

### Zusammenfassung der Erfindung

Diese Aufgabe wird zumindest teilweise gelöst durch ein Gemischzuführsystem für einen Verbrennungsmotor mit quantitativer Gemischregelung gemäß Anspruch 1. Ferner, wird die Aufgabe durch ein Verfahren zum Betreiben eines Gemischzuführsystems für einen Verbrennungsmotor mit quantitativer Gemischregelung gemäß Anspruch 14 gelöst. Weitere Ausführungsformen, Modifikationen und Verbesserungen ergeben sich anhand der folgenden Beschreibung und der beigefügten Ansprüche.

Gemäß einer Ausführungsform wird ein Gemischzuführsystem für einen Verbrennungsmotor mit quantitativer Gemischregelung, insbesondere einen Gasmotor oder einen Zweistoffbetriebmotor, bereitgestellt. Das Gemischzuführsystem weist ein mit dem Verbrennungsmotor verbindbares Aufladesystem, aufweisend einen Bypass und ein im Bypass angeordnetes Bypassventil, auf. Ferner weist das Gemischzuführsystem einen Ventiltrieb zur periodischen Betätigung eines Einlassventils des Verbrennungsmotors auf, wobei eine Ventilsteuerzeit des Einlassventils durch den Ventiltrieb steuerbar ist. Das Gemischzuführsystem ist dazu eingerichtet, bei einem Anstieg einer Motorlast das Bypassventil mindestens teilweise zu schließen und die Ventilsteuerzeit für eine Verlängerung der Ventilöffnungsdauer zu verändern, und während und/oder nach Ablauf einer Ventiltrieblatenzzeit das Bypassventil mindestens teilweise zu öffnen; und/oder bei einer Verringerung der Motorlast das Bypassventil mindestens teilweise zu öffnen und die Ventilsteuerzeit für eine Verkürzung der Ventilöffnungsdauer zu verändern, und während und/oder nach Ablauf einer Ventiltrieblatenzzeit das Bypassventil mindestens teilweise zu schließen.

Bei dem Anstieg der Motorlast wird durch eine Erhöhung der Brennstoffmenge zusätzliche thermische Energie für das Aufladesystem bereitgestellt. Bei einem unveränderten Öffnungsgrad des Bypassventils erhöht sich der Turboladerdruck oder der Förderdruck, trotzdem steigt jedoch die benötigte Menge Luft und/oder Gemisch stärker an als die vom Aufladesystem bereitgestellte. Um das Luftüberschussverhältnis innerhalb definierter Grenzen zu halten, kann daher das Gemischzuführsystem dazu eingerichtet sein bei dem Anstieg der Motorlast das Bypassventil teilweise zu schließen bzw. den Öffnungsgrad des Bypassventils zu verringern. Bei der Verringerung der Motorlast wird weniger thermische Energie für das Aufladesystem bereitgestellt. Bei einem unveränderten Öffnungsgrad des Bypassventils verringert sich der Turboladerdruck oder der Förderdruck, jedoch nicht in dem für die Einhaltung des Luftüberschussverhältnisses innerhalb definierter Grenzen benötigten Maß. Daher kann das Gemischzuführsystem dazu eingerichtet sein bei der Verringerung der Motorlast das Bypassventil teilweise zu öffnen bzw. den Öffnungsgrad des Bypassventils zu vergrößern.

Die Ventiltrieblatenzzeit entspricht einem Zeitraum zwischen einer Veränderung der Ventilsteuerzeit und einem Zeitpunkt, an dem die Veränderung der Ventilsteuerzeit ihre volle Wirkung entfaltet. In anderen Worten kann der Ventiltrieb eine gewisse Trägheit aufweisen, d.h. nach einer Änderung der Ventilsteuerzeit des Einlassventils kann eine gewisse Zeit vergehen bis die Änderung der Ventilsteuerzeit in ihrer angestrebten Art eintritt. Durch eine Änderung der Motorlast, d.h. bei dem Anstieg oder der Verringerung der Motorlast, wird auch auf einer kurzen Zeitskala eine kontrollierte Einstellung des Luftüberschussverhältnisses in den Zylindern von Verbrennungsmotoren benötigt um innerhalb der Betriebsgrenzen oder physikalischen Grenzen zu operieren, und schädliche Auswirkungen, wie z.B. eine Erhöhung der NOx-Emission zu vermeiden. Die Trägheit von bekannten Ventiltrieben, ohne Bereitstellen von zusätzlichen Mitteln zum Einstellen des Luftüberschussverhältnisses, führt innerhalb der Ventiltrieblatenzzeit zu negativen Auswirkungen. Die Ventiltrieblatenzzeit dauert länger als ein einzelnes Arbeitsspiel. Eine typische Ventiltrieblatenzzeit kann dabei beispielsweise etwa 5-10 Arbeitszyklen betragen.

Das in dem Bypass angeordnete Bypassventil ist vorteilhafterweise dazu eingerichtet schnell zu reagieren, insbesondere innerhalb eines Bruchteils einer Ventiltrieblatenzzeit. Durch teilweises oder vollständiges Schließen des Bypassventils bei dem Anstieg der Motorlast, kann das Luftüberschussverhältnis in den Zylindern während der Ventiltrieblatenzzeit innerhalb der Betriebsgrenzen eingestellt werden. Bei oder nach Ablauf der Ventiltrieblatenzzeit kann das Gemischzuführsystem dazu eingerichtet sein das Bypassventil mindestens teilweise zu öffnen. Vorteilhafterweise wird hierdurch ermöglicht bei oder nach Ablauf der Ventiltrieblatenzzeit das Luftüberschussverhältnis überwiegend oder sogar vollständig durch den Ventiltrieb zu kontrollieren.

In einer Ausführungsform ist das Gemischzuführsystem konfiguriert, bei dem Anstieg der Motorlast das Bypassventil in einer ersten Hälfte der Ventiltrieblatenzzeit mindestens teilweise zu schließen, und/oder bei der Verringerung der Motorlast das Bypassventil in der ersten Hälfte der Ventiltrieblatenzzeit mindestens teilweise zu öffnen.

Durch teilweises Öffnen des Bypassventils bei der Verringerung der Motorlast, kann das Luftüberschussverhältnis in den Zylindern innerhalb der Betriebsgrenzen eingestellt werden, während der Ventiltrieblatenzzeit. Bei oder nach Ablauf der Ventiltrieblatenzzeit kann das Gemischzuführsystem dazu eingerichtet sein das Bypassventil mindestens teilweise zu schließen. Vorteilhafterweise wird hierdurch ermöglicht bei oder nach Ablauf der Ventiltrieblatenzzeit das Luftüberschussverhältnis überwiegend oder sogar vollständig durch den Ventiltrieb zu kontrollieren.

Bei einer konstanten oder stationären Motorlast kann das Bypassventil geringfügig geöffnet sein oder fast geschlossen sein. In anderen Worten kann der Öffnungsgrad des Bypassventils bei einer konstanten Motorlast sehr gering sein. Hierdurch wird ermöglicht, dass bei einem Anstieg der Motorlast das Bypassventil weiter geschlossen werden kann, d.h. der Öffnungsgrad des Bypassventils verringert werden kann. Insbesondere ist bei einer konstanten Motorlast der Öffnungsgrad des Bypassventils gemäß Ausführungsformen der vorliegenden Offenbarung wesentlich geringer als bei Gemischzuführsystem, die ein Bypassventil aufweisen aber keine zusätzlichen Mittel zum Einstellen des Luftüberschussverhältnisses bereitstellen. In dem bei einer konstanten oder stationären Motorlast das Bypassventils geringfügig geöffnet sein oder fast geschlossen sein kann, wird ermöglicht dass Energieverluste, insbesondere durch Verschwendung von Enthalpie auf einer Turbinenseite des Turboladers oder Rezirkulationsverluste auf einer Verdichterseite des Turboladers, sehr geringfügig sind. Insbesondere bei großen, mittelschnelllaufenden Verbrennungsmotoren sind die Reduzierung von Energieverlusten, und damit ein geringerer Kraftstoffverbrauch, von erheblicher Bedeutung.

Bei Verwendung von dem Gemischzuführsystem für den Verbrennungsmotor können veränderte Anforderungen an der Motorlast häufig auftreten. Beispielsweise kann auf ein Intervall konstanter oder stationärer Motorlast ein Anstieg der Motorlast und im Anschluss ein weiterer Anstieg oder eine Verringerung der Motorlast erwünscht sein. Gemäß einem allgemeinen Aspekt ist vorgesehen, dass das Gemischzuführsystem dazu eingerichtet ist, während und/oder nach Ablauf einer Ventiltrieblatenzzeit das Bypassventil mindestens teilweise derart zu öffnen bzw. den Öffnungsgrad des Bypassventils derart einzustellen, dass im Falle eines erneuten Anstiegs der Motorlast, der Bypass ausreichend geschlossen werden kann bzw. der Öffnungsgrad des Bypassventils ausreichend verringert werden kann. Gemäß einer Ausgestaltungsform sind ein erster Öffnungsgrad des Bypassventils vor dem Anstieg der Motorlast und ein zweiter Öffnungsgrad während und/oder nach Ablauf der Ventiltrieblatenzzeit im Wesentlichen gleich. In anderen Worten kann für eine stationäre Motorlast ein festlegbarer Öffnungsgrad vorgesehen sein, wobei während und/oder nach Ablauf der Ventiltrieblatenzzeit das Gemischzuführsystem dazu eingerichtet sein kann den festlegbaren Öffnungsgrad einzustellen.

Gemäß einem allgemeinen Aspekt kann das Gemischzuführsystem vorgesehen sein bei einem abruptem Anstieg der Motorlast das Bypassventil mindestens teilweise zu schließen und die Ventilsteuerzeit für die Verlängerung der Ventilöffnungsdauer zu verändern, und während und/oder nach Ablauf der Ventiltrieblatenzzeit das Bypassventil mindestens teilweise zu öffnen. Bei langsameren Änderungen der Motorlast, beispielsweise Änderungen von Umgebungsbedingungen wie eine Temperatur und/oder ein Druck und/oder eine Gasqualität, kann vorgesehen sein den Öffnungsgrad des Bypassventils unverändert zu lassen. Bei langsameren Änderungen der Motorlast kann das Gemischzuführsystem eingerichtet sein die Ventilsteuerzeit für die Verlängerung der Ventilöffnungsdauer zu verändern.

Gemäß einer Ausführungsform weist das Gemischzuführsystem eine Kontrolleinheit auf. Die Kontrolleinheit kann eingerichtet sein den Öffnungsgrad des Bypassventils einzustellen und/oder die Ventilsteuerzeit des Einlassventils durch den Ventiltrieb zu verändern. Insbesondere kann die Kontrolleinheit eingerichtet sein, bei dem Anstieg der Motorlast und/oder bei der Verringerung der Motorlast den Öffnungsgrad des Bypassventils einzustellen und die Ventilsteuerzeit des Einlassventils durch den Ventiltrieb zu verändern.

Die Kontrolleinheit kann ferner dazu eingerichtet sein, während und/oder nach Ablauf der Ventiltrieblatenzzeit, in Abhängigkeit eines Parameters den Öffnungsgrad des Bypassventils einzustellen. Der Parameter kann dazu geeignet sein zu bestimmen ob die Ventiltrieblatenzzeit abgelaufen ist. Der Parameter kann dazu geeignet sein eine mittels des Bypasses benötigte Menge Luft und/oder Gemisch zu bestimmen bzw. eine mittels des Bypasses benötigte Absenkung der Menge Luft und/oder Gemisch zu bestimmen. Beispielsweise kann der Parameter ein Brennstoff-Luft-Verhältnis oder ein aus Messgrößen abgeschätztes Brennstoff-Luft-Verhältnis in einer Brennkammer des Verbrennungsmotors sein. In einer anderen beispielshaften Ausführungsform ist der Parameter ein Ladedruck. Der Ladedruck steht dabei stellvertretend für die Luftmenge im Zylinder.

Das Bypassventil kann ein Drosselventil sein. Ferner kann das Bypassventil schrittweise oder stufenlos einstellbar sein. Die Kontrolleinheit kann ferner dazu sein eingerichtet, während und/oder nach Ablauf der Ventiltrieblatenzzeit, den Öffnungsgrad des Bypassventils schrittweise oder stufenlos einzustellen. Während der Ventiltrieblatenzzeit kann die Veränderung der Ventilsteuerzeit schrittweise oder stufenlos ihre Wirkung entfalten, bis am Ende des Zeitraums die Veränderung der Ventilsteuerzeit ihre volle Wirkung entfaltet. Die Kontrolleinheit kann ferner dazu sein eingerichtet, während und/oder nach Ablauf der Ventiltrieblatenzzeit, den Öffnungsgrad des Bypassventils in Abhängigkeit des Parameters schrittweise oder stufenlos einzustellen.

Das Aufladesystem kann einen oder mehrere Turbolader aufweisen. Jeder Turbolader kann einen Verdichter und eine mittels einer Turboladerwelle mit dem Verdichter verbundene Turbine aufweisen. Das Aufladesystem kann mit einem Einlasssammler und/oder einer Abgassammelleitung des Verbrennungsmotors mit quantitativer Gemischregelung verbindbar sein. Insbesondere können ein Auslassbereich des Verdichters mit dem Einlasssammler und ein Einlassbereich der Turbine mit der Abgassammelleitung verbindbar sein. In einer mit dem Auslassbereich des Verdichters verbundenen und mit dem Einlasssammler verbindbaren Anschlussleitung kann ein Ladeluftkühler und/oder eine Drosseleinrichtung, beispielsweise eine Drosselklappe, angeordnet sein. An einem Einlassbereich des Verdichters kann eine Luftansaugvorrichtung angeschlossen sein und/oder ein Gasmischer angeschlossen sein, wobei der Gasmischer die Luftansaugvorrichtung und eine Gaszuführung aufweist. Der Bypass kann dabei den Auslassbereich des Verdichters mit dem Einlassbereich des Verdichters verbinden und/oder der Bypass kann dabei den Einlassbereich der Turbine mit dem Auslassbereich der Turbine verbinden. Der "und" Fall ist dahingehend zu verstehen, dass der Bypass zwei separate Leitungen aufweist, eine Luftrückführleitung oder Gemischrückführleitung und eine Abgasbypassleitung. Sowohl die Luftrückführleitung oder Gemischrückführleitung als auch die Abgasbypassleitung weisen bevorzugt jeweils ein Bypassventil auf.

Das Aufladesystem kann ferner mindestens zwei Turbolader aufweisen, wobei der Bypass einen Einlassbereich einer Turbine des ersten Turboladers mit einem Auslassbereich einer Turbine des zweiten Turboladers und/oder einen Auslassbereich eines Verdichters des ersten Turboladers mit einem Einlassbereich eines Verdichters des zweiten Turboladers verbinden kann.

Beispielsweise kann das Aufladesystem einen Niederduck-Turbolader und einen Hochdruck-Turbolader aufweisen. An einem Einlassbereich des Niederdruck-Verdichters kann die Luftansaugvorrichtung angeschlossen sein und/oder der Gasmischer angeschlossen sein, wobei der Gasmischer die Luftansaugvorrichtung und die Gaszuführung aufweist. Das Aufladesystem kann eine Leitung zum Verbinden eines Auslassbereichs des Niederduck-Verdichters mit einem Einlassbereich des Hochdruck-Verdichters aufweisen. In der Leitung kann ein Zwischenkühler angeordnet sein.

Der Ventiltrieb kann zum zeitlichen Verschieben der Betätigung des Einlassventils eingerichtet sein. Somit kann eine zeitliche Verschiebung des Ventilhubs erfolgen, insbesondere zur Steuerung der Zylinderladung. Das zeitliche Verschieben der Schließbewegung des Einlassventils kann stufenlos einstellbar sein. Hierdurch wird eine genaue Einstellung der Befüllung des Zylinders, insbesondere des Zylinderdrucks, ermöglicht. Dadurch können die einzelnen Zylinder auch einander gleichgestellt werden.

Der Ventiltrieb kann zum zeitlichen Verschieben einer Schließbewegung des Einlassventils eingerichtet sein. Das zeitliche Verschieben der Schließbewegung des Einlassventils kann stufenlos einstellbar sein. Hierdurch wird eine genaue Einstellung der Befüllung des Zylinders, insbesondere des Zylinderdrucks, ermöglicht.

Gemäß einer Ausführungsform weist der Ventiltrieb ferner ein Verzögerungselement zum Verschieben der Schließbewegung des Einlassventils auf. Insbesondere kann das Verzögerungselement ein mechanisches oder ein hydraulisches Verzögerungselement sein. Das Verzögerungselement kann eine Hydraulikkammer zum Verschieben der Schließbewegung des Einlassventils mittels eines Hydraulikmediums aufweisen. Der Ventiltrieb kann einen Einlassventil-Betätigungsmechanismus aufweisen, wobei der Einlassventil-Betätigungsmechanismus mit dem Verzögerungselement in Kontakt zum zeitlichen Verschieben einer Schließbewegung des Einlassventils eingerichtet sein kann. Beispielsweise kann der Einlassventil-Betätigungsmechanismus mindestens eines ausgewählt von einem Kipphebel, einem Schlepphebel, einer Stößelstange und einer Ventilbrücke aufweisen, wobei das Verzögerungselement in Kontakt mit dem Kipphebel oder dem Schlepphebel oder der Stößelstange oder der Ventilbrücke sein kann.

Ferner kann alternativ oder ergänzend zur zeitlichen Verschiebung der Schliessbewegung des Einlassventils oder der zeitlichen Verschiebung des Ventilhubs auch der Ventilhub zur Steuerung der Zylinderladung angepasst werden.. Somit kann der Ventiltrieb zum Anpassen des Ventilhubs eingerichtet sein.

Die vorangehend beschriebenen Ausgestaltungformen, bezogen auf Komponenten des Einlassventils und/oder Komponenten des Ventiltriebs sind entsprechend auch für ein Auslassventil des Verbrennungsmotors übertragbar.

Der Verbrennungsmotor mit quantitativer Gemischregelung kann ein stationärer Verbrennungsmotor oder ein Antriebsmotor sein. Der Verbrennungsmotor kann ein Ottomotor sein, insbesondere kann der Verbrennungsmotor ein Viertaktmotor sein. Der Verbrennungsmotor mit quantitativer Gemischregelung kann ein Gasmotor oder ein Zweistoffbetriebmotor sein. Eine Gaszuführung des Gasmotors oder des Zweistoffbetriebmotors kann über das Aufladesystem mittels der an dem Gasmischer angeschlossenen Gaszuführung erfolgen und/oder über eine separate Gaseinspritzung, insbesondere über der an dem Einlasssammler angeschlossene Gaseinspritzung. Die Gaseinspritzung kann auch über einen zwischen dem Einlasssammler und dem Zylinder angeordneten Ansaugkanal erfolgen (Saugrohreinspritzung).

Gemäß einer Ausführungsform wird ein Verbrennungsmotor mit quantitativer Gemischregelung, insbesondere ein Gasmotor oder ein Zweistoffbetriebmotor, bereitgestellt. Der Verbrennungsmotor weist ein Gemischzuführsystem nach einem der hierin beschriebenen Ausführungsformen auf. Der Verbrennungsmotor kann dabei eine Vielzahl Zylinder und einen Ventiltrieb zur periodischen Betätigung eines oder mehrerer Einlassventile für jeden Zylinder des Verbrennungsmotors aufweisen.

Die hierin beschriebenen Ausführungsformen können mit geringfügigen konstruktiven Aufwand realisiert werden, insbesondere für Gemischzuführsysteme, die bereits Ventiltriebe aufweisen bei denen eine Ventilsteuerzeit des Einlassventils durch den Ventiltrieb steuerbar ist. Dadurch lässt sich auf einfache und kostengünstige Weise ein verbessertes Gemischzuführsystem erzielen.

Gemäß einer Ausführungsform wird ein Verfahren zum Betreiben eines Gemischzuführsystems für einen Verbrennungsmotor mit quantitativer Gemischregelung bereitgestellt. Insbesondere kann der Verbrennungsmotor mit quantitativer Gemischregelung ein Gasmotor oder ein Zweistoffbetriebmotor sein. Das Gemischzuführsystem weist ein mit dem Verbrennungsmotor verbindbares Aufladesystem, aufweisend einen Bypass und ein im Bypass angeordnetes Bypassventil, auf. Ferner weist das Gemischzuführsystem einen Ventiltrieb zur periodischen Betätigung eines Einlassventils des Verbrennungsmotors auf, wobei eine Ventilsteuerzeit des Einlassventils durch den Ventiltrieb steuerbar ist. Insbesondere kann der Verbrennungsmotor das Gemischzuführsystem gemäß einem der hierin beschriebenen Ausführungsformen aufweisen.

Das Verfahren weist auf:
A) Bei dem Anstieg einer Motorlast:
   A1) Teilweise Schließen des Bypassventils und Verschieben der Ventilsteuerzeit, um die Ventilöffnungsdauer zu verlängern; und
   A2) Teilweise Öffnen des Bypassventils während und/oder nach Ablauf einer Ventiltrieblatenzzeit; und/oder
B) Bei der Verringerung der Motorlast:
   B1) Teilweise Öffnen des Bypassventils und Verschieben der Ventilsteuerzeit, um die Ventilöffnungsdauer zu verkürzen; und
   B2) Teilweise Schließen des Bypassventils während und/oder nach Ablauf einer Ventiltrieblatenzzeit.

Schritt A2) erfolgt nach Schritt A1). Schritt B2) erfolgt nach Schritt B1). Die Schritte A2) und/oder B2) können in Abhängigkeit des Brennstoff-Luft-Verhältnisses eingestellt werden.

### Kurze Beschreibung der Figuren

Nachfolgend wird die Erfindung anhand von Ausführungsformen näher erläutert, ohne dass diese den durch die Ansprüche definierten Schutzbereich einschränken sollen.

Die beiliegenden Zeichnungen veranschaulichen Ausführungsformen und dienen zusammen mit der Beschreibung der Erläuterung der Prinzipien der Erfindung. Die Elemente der Zeichnungen sind relativ zueinander und nicht notwendigerweise maßstabsgetreu. Gleiche Bezugszeichen bezeichnen entsprechend ähnliche Teile.

Die Figuren zeigen:
Figur 1 zeigt einen Teil eines erfindungsgemäßen Gemischzuführsystems gemäß einer Ausführungsform.
Figur 2 zeigt einen Teil eines erfindungsgemäßen Gemischzuführsystems gemäß einer Ausführungsform.
Figur 3 zeigt einen Teil eines erfindungsgemäßen Gemischzuführsystems gemäß einer Ausführungsform.
Figur 4 zeigt einen Teil eines erfindungsgemäßen Gemischzuführsystems gemäß einer Ausführungsform.

### Ausführliche Beschreibung

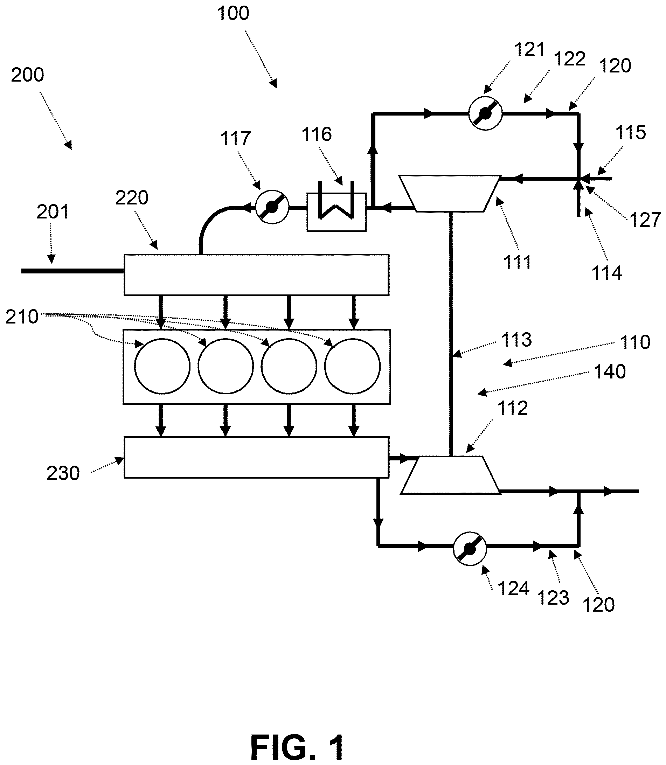

Die Figuren 1 bis 4 zeigen - in schematischer Darstellung - Teile von verschiedenen Ausführungsformen eines erfindungsgemäßen Gemischzuführsystems 100, 300, 400, 500 für einen Verbrennungsmotor 200 mit quantitativer Gemischregelung, insbesondere einen Gasmotor oder einen Zweistoffbetriebmotor.

Die gestrichelten Pfeile in den Figuren 1 bis 4 deuten die Zuordnung der Bezugszeichen zu den Merkmalen an. Die fetten und als durchgezogene Linien gezeichneten Pfeile in den Figuren 1 bis 4 deuten eine Flussrichtung an.

Die Figuren illustrieren Teile des erfindungsgemäßen Gemischzuführsystems 100, 300, 400, 500, insbesondere ein Aufladesystem 110, 310, 410, 510 und zeigen beispielhaft Teile des mit dem Gemischzuführsystems 100, 300, 400, 500 verbindbaren Verbrennungsmotor.

Figur 1 illustriert das Gemischzuführsystem 100. Das Gemischzuführsystem 100 weist einen Ventiltrieb zur periodischen Betätigung eines Einlassventils des Verbrennungsmotors 200 auf, wobei eine Ventilsteuerzeit des Einlassventils durch den Ventiltrieb steuerbar ist (nicht dargestellt).

Ferner weist das Gemischzuführsystem 100 ein mit dem Verbrennungsmotor 200 verbindbares Aufladesystem 110 auf. Das Aufladesystem kann einen Turbolader 140 umfassen, wobei der Turbolader einen Verdichter 111 und eine mittels einer Turboladerwelle 113 verbundene Turbine 112 aufweist. Ein Einlassbereich der Turbine 112 kann verbindbar mit einer Abgassammelleitung 230 sein. Ein Auslassbereich des Verdichters 111 kann mittels einer Anschlussleitung mit einem Einlasssammler 220 des Verbrennungsmotors 200 verbindbar sein. In der Anschlussleitung kann ein Ladeluftkühler 116 und/oder eine Drosselklappe 117 angeschlossen sein. An einem Einlassbereich des Verdichters 111 kann ein Gasmischer 127 angeschlossen sein, wobei der Gasmischer 127 eine Gaszuführung 114 und/oder eine Luftansaugvorrichtung 115 aufweist.

Das Aufladesystem 110 weist einen Bypass 120 auf. Der Bypass 120 kann eine Gemischrückführleitung 122 und eine Abgasbypassleitung 123 aufweisen. Im Bypass ist ein Bypassventil 121, 124 angeordnet. Insbesondere sind in der Gemischrückführleitung 122 und in der Abgasbypassleitung 123 jeweils ein Bypassventil 121, 124 angeordnet. Der Bypass 120 kann den Einlassbereich der Turbine 112 des Turboladers 140 mit dem Auslassbereich der Turbine 112 des Turboladers 140 und den Auslassbereich des Verdichters 111 des Turboladers 140 mit dem Einlassbereich des Verdichters 111 des Turboladers 140 verbinden.

Der Verbrennungsmotor 200 kann mindestens einen Zylinder 210 aufweisen. Der mindestens eine Zylinder kann mit dem Einlasssammler 220 und/oder der Abgassammelleitung 230 verbunden sein. Der Verbrennungsmotor 200 kann mindestens ein Einlassventil aufweisen, wobei das Einlassventil zwischen dem Einlasssammler 220 und dem Zylinder 210 angeordnet sein kann (nicht dargestellt). Das Einlassventil kann durch den Ventiltrieb periodisch betätigt werden, wobei eine Ventilsteuerzeit des Einlassventils durch den Ventiltrieb steuerbar ist. Eine Gaszuführung des Verbrennungsmotors 200 kann über das Aufladesystem 110 mittels der an dem Gasmischer 127 angeschlossenen Gaszuführung 114 erfolgen und/oder über eine separate Gaseinspritzung 201, insbesondere über der an dem Einlasssammler 220 angeschlossenen Gaseinspritzung 201.

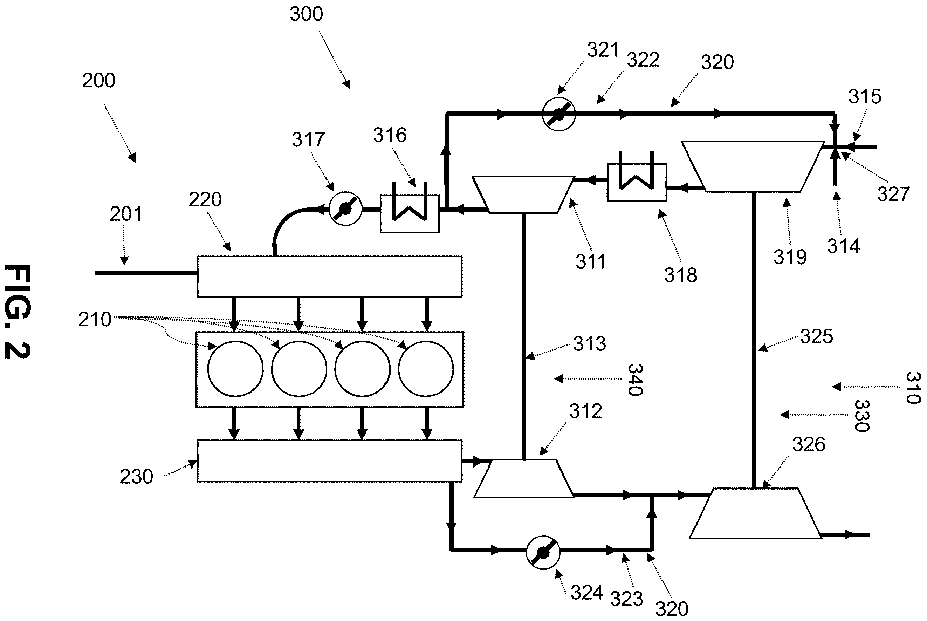

Figur 2 illustriert das Gemischzuführsystem 300. Das Gemischzuführsystem 300 weist einen Ventiltrieb zur periodischen Betätigung eines Einlassventils des Verbrennungsmotors 200 auf, wobei eine Ventilsteuerzeit des Einlassventils durch den Ventiltrieb steuerbar ist (nicht dargestellt).

Ferner weist das Gemischzuführsystem 300 ein mit dem Verbrennungsmotor 200 verbindbares Aufladesystem 310 auf. Das Aufladesystem 310 kann einen Niederdruck-Turbolader 330 umfassen, wobei der Niederdruck-Turbolader 330 einen Niederdruck-Verdichter 319 und eine mittels einer Niederdruck-Turboladerwelle 325 verbundene Niederdruck-Turbine 326 aufweist. An einem Einlassbereich des Niederdruck-Verdichters 319 kann ein Gasmischer 327 angeschlossen sein, wobei der Gasmischer 327 eine Gaszuführung 314 und/oder eine Luftansaugvorrichtung 315 aufweist.

Das Aufladesystem 310 kann einen Hochdruck-Turbolader 340 umfassen, wobei der Hochdruck-Turbolader 340 einen Hochdruck-Verdichter 311 und eine mittels einer Turboladerwelle 313 verbundene Hochdruck-Turbine 312 aufweist.

Das Aufladesystem 310 kann eine Leitung zum Verbinden eines Auslassbereichs des Niederduck-Verdichters 319 mit einem Einlassbereich des Hochdruck-Verdichters 311 aufweisen. In der Leitung kann ein Zwischenkühler 318 angeordnet sein.

Ein Einlassbereich der Hochdruck-Turbine 312 kann verbindbar mit einer Abgassammelleitung 230 sein. Ein Auslassbereich der Hochdruck-Turbine 312 kann mit einem Einlassbereich der Niederdruck-Turbine 326 verbunden sein.

Ein Auslassbereich des Hochdruck-Verdichters 311 kann mittels einer Anschlussleitung mit einem Einlasssammler 220 des Verbrennungsmotors 200 verbindbar sein. In der Anschlussleitung kann ein Ladeluftkühler 316 und/oder eine Drosselklappe 317 angeschlossen sein.

Das Aufladesystem 310 weist einen Bypass 320 auf. Der Bypass 320 kann eine Gemischrückführleitung 322 und eine Abgasbypassleitung 323 aufweisen. Im Bypass ist ein Bypassventil 321, 324 angeordnet. Insbesondere sind in der Gemischrückführleitung 322 und in der Abgasbypassleitung 323 jeweils ein Bypassventil 321, 324 angeordnet. Der Bypass 320 kann den Einlassbereich der Hochdruck-Turbine 312 des Hochdruck-Turboladers 340 mit dem Auslassbereich der Hochdruck-Turbine 312 des Hochdruck-Turboladers 340 und den Auslassbereich des Hochdruck-Verdichters 311 des Hochdruck-Turboladers 340 mit dem Einlassbereich des Niederdruck-Verdichters 319 des Niederdruck-Turboladers 330 verbinden.

Der Verbrennungsmotor 200 kann mindestens einen Zylinder 210 aufweisen. Der mindestens eine Zylinder kann mit dem Einlasssammler 220 und/oder der Abgassammelleitung 230 verbunden sein. Der Verbrennungsmotor 200 kann mindestens ein Einlassventil aufweisen, wobei das Einlassventil zwischen dem Einlasssammler 220 und dem Zylinder 210 angeordnet ist (nicht dargestellt). Das Einlassventil kann durch den Ventiltrieb periodisch betätigt werden, wobei eine Ventilsteuerzeit des Einlassventils durch den Ventiltrieb steuerbar ist. Eine Gaszuführung des Verbrennungsmotors 200 kann über das Aufladesystem 310 mittels der an dem Gasmischer 327 angeschlossenen Gaszuführung 314 erfolgen und/oder über eine separate Gaseinspritzung 201, insbesondere über der an dem Einlasssammler 220 angeschlossenen Gaseinspritzung 201.

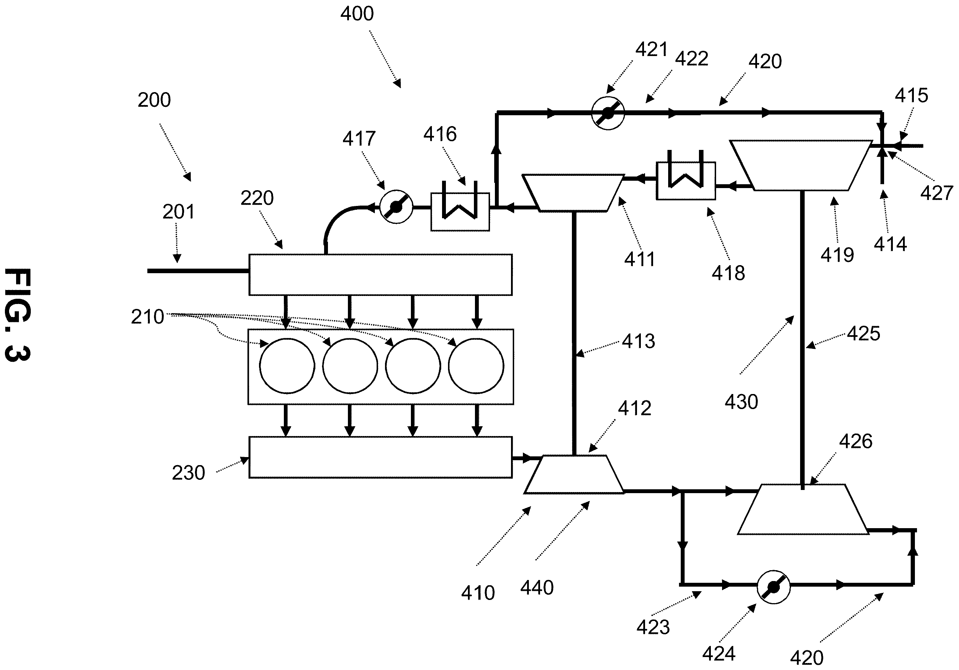

Figur 3 illustriert das Gemischzuführsystem 400. Das Gemischzuführsystem 400 weist einen Ventiltrieb zur periodischen Betätigung eines Einlassventils des Verbrennungsmotors 200 auf, wobei eine Ventilsteuerzeit des Einlassventils durch den Ventiltrieb steuerbar ist (nicht dargestellt).

Ferner weist das Gemischzuführsystem 400 ein mit dem Verbrennungsmotor 200 verbindbares Aufladesystem 410 auf. Das Aufladesystem 410 kann einen Niederdruck-Turbolader 430 umfassen, wobei der Niederdruck-Turbolader 430 einen Niederdruck-Verdichter 419 und eine mittels einer Niederdruck-Turboladerwelle 425 verbundene Niederdruck-Turbine 426 aufweist. An einem Einlassbereich des Niederdruck-Verdichters 419 kann ein Gasmischer 427 angeschlossen sein, wobei der Gasmischer 427 eine Gaszuführung 414 und/oder eine Luftansaugvorrichtung 415 aufweist.

Das Aufladesystem 410 kann einen Hochdruck-Turbolader 440 umfassen, wobei der Hochdruck-Turbolader 440 einen Hochdruck-Verdichter 411 und eine mittels einer Turboladerwelle 413 verbundene Hochdruck-Turbine 412 aufweist.

Das Aufladesystem 410 kann eine Leitung zum Verbinden eines Auslassbereichs des Niederduck-Verdichters 419 mit einem Einlassbereich des Hochdruck-Verdichters 411 aufweisen. In der Leitung kann ein Zwischenkühler 418 angeordnet sein.

Ein Einlassbereich der Hochdruck-Turbine 412 kann verbindbar mit einer Abgassammelleitung 230 sein. Ein Auslassbereich der Hochdruck-Turbine 412 kann mit einem Einlassbereich der Niederdruck-Turbine 426 verbunden sein.

Ein Auslassbereich des Hochdruck-Verdichters 411 kann mittels einer Anschlussleitung mit einem Einlasssammler 220 des Verbrennungsmotors 200 verbindbar sein. In der Anschlussleitung kann ein Ladeluftkühler 416 und/oder eine Drosselklappe 417 angeschlossen sein.

Das Aufladesystem 410 weist einen Bypass 420 auf. Der Bypass 420 kann eine Gemischrückführleitung 422 und eine Abgasbypassleitung 423 aufweisen. Im Bypass 420 ist ein Bypassventil 421, 424 angeordnet. Insbesondere sind in der Gemischrückführleitung 422 und in der Abgasbypassleitung 423 jeweils ein Bypassventil 421, 424 angeordnet. Der Bypass 420 kann den Einlassbereich der Niederdruck-Turbine 426 des Niederdruck-Turboladers 430 mit dem Auslassbereich der Niederdruck-Turbine 426 des Niederdruck-Turboladers 430 und den Auslassbereich des Hochdruck-Verdichters 411 des Hochdruck-Turboladers 440 mit dem Einlassbereich des Niederdruck-Verdichters 419 des Niederdruck-Turboladers 430 verbinden.

Der Verbrennungsmotor 200 kann mindestens einen Zylinder 210 aufweisen. Der mindestens eine Zylinder kann mit dem Einlasssammler 220 und/oder der Abgassammelleitung 230 verbunden sein. Der Verbrennungsmotor 200 kann mindestens ein Einlassventil aufweisen, wobei das Einlassventil zwischen dem Einlasssammler 220 und dem Zylinder 210 angeordnet ist (nicht dargestellt). Das Einlassventil kann durch den Ventiltrieb periodisch betätigt werden, wobei eine Ventilsteuerzeit des Einlassventils durch den Ventiltrieb steuerbar ist. Eine Gaszuführung des Verbrennungsmotors 200 kann über das Aufladesystem 410 mittels der an dem Gasmischer 427 angeschlossenen Gaszuführung 414 erfolgen und/oder über eine separate Gaseinspritzung 201, insbesondere über der an dem Einlasssammler 220 angeschlossenen Gaseinspritzung 201.

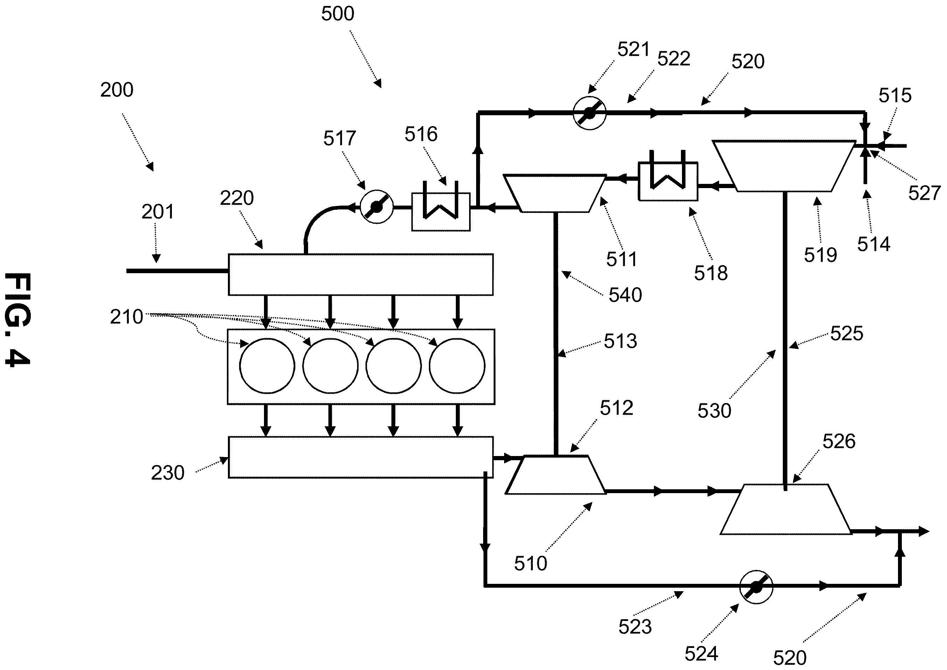

Figur 4 illustriert das Gemischzuführsystem 500. Das Gemischzuführsystem 500 weist einen Ventiltrieb zur periodischen Betätigung eines Einlassventils des Verbrennungsmotors 200 auf, wobei eine Ventilsteuerzeit des Einlassventils durch den Ventiltrieb steuerbar ist (nicht dargestellt).

Ferner weist das Gemischzuführsystem 500 ein mit dem Verbrennungsmotor 200 verbindbares Aufladesystem 510 auf. Das Aufladesystem 510 kann einen Niederdruck-Turbolader 530 umfassen, wobei der Niederdruck-Turbolader 530 einen Niederdruck-Verdichter 519 und eine mittels einer Niederdruck-Turboladerwelle 525 verbundene Niederdruck-Turbine 526 aufweist. An einem Einlassbereich des Niederdruck-Verdichters 519 kann ein Gasmischer 527 angeschlossen sein, wobei der Gasmischer 527 eine Gaszuführung 514 und/oder eine Luftansaugvorrichtung 515 aufweist.

Das Aufladesystem 510 kann einen Hochdruck-Turbolader 540 umfassen, wobei der Hochdruck-Turbolader 540 einen Hochdruck-Verdichter 511 und eine mittels einer Turboladerwelle 513 verbundene Hochdruck-Turbine 512 aufweist.

Das Aufladesystem 510 kann eine Leitung zum Verbinden eines Auslassbereichs des Niederduck-Verdichters 519 mit einem Einlassbereich des Hochdruck-Verdichters 511 aufweisen. In der Leitung kann ein Zwischenkühler 518 angeordnet sein.

Ein Einlassbereich der Hochdruck-Turbine 512 kann verbindbar mit einer Abgassammelleitung 230 sein. Ein Auslassbereich der Hochdruck-Turbine 512 kann mit einem Einlassbereich der Niederdruck-Turbine 526 verbunden sein.

Ein Auslassbereich des Hochdruck-Verdichters 511 kann mittels einer Anschlussleitung mit einem Einlasssammler 220 des Verbrennungsmotors 200 verbindbar sein. In der Anschlussleitung kann ein Ladeluftkühler 516 und/oder eine Drosselklappe 517 angeschlossen sein.

Das Aufladesystem 510 weist einen Bypass 520 auf. Der Bypass 520 kann eine Gemischrückführleitung 522 und eine Abgasbypassleitung 523 aufweisen. Im Bypass 520 ist ein Bypassventil 521, 524 angeordnet. Insbesondere sind in der Gemischrückführleitung 522 und in der Abgasbypassleitung 523 jeweils ein Bypassventil 521, 524 angeordnet. Der Bypass 520 kann den Einlassbereich der Hochdruck-Turbine 512 des Hochdruck-Turboladers 540 mit dem Auslassbereich der Niederdruck-Turbine 526 des Niederdruck-Turboladers 530 und den Auslassbereich des Hochdruck-Verdichters 511 des Hochdruck-Turboladers 540 mit dem Einlassbereich des Niederdruck-Verdichters 519 des Niederdruck-Turboladers 530 verbinden.

Der Verbrennungsmotor 200 kann mindestens einen Zylinder 210 aufweisen. Der mindestens eine Zylinder kann mit dem Einlasssammler 220 und/oder der Abgassammelleitung 230 verbunden sein. Der Verbrennungsmotor 200 kann mindestens ein Einlassventil aufweisen, wobei das Einlassventil zwischen dem Einlasssammler 220 und dem Zylinder 210 angeordnet ist (nicht dargestellt). Das Einlassventil kann durch den Ventiltrieb periodisch betätigt werden, wobei eine Ventilsteuerzeit des Einlassventils durch den Ventiltrieb steuerbar ist. Eine Gaszuführung des Verbrennungsmotors 200 kann über das Aufladesystem 510 mittels der an dem Gasmischer 527 angeschlossenen Gaszuführung 514 erfolgen und/oder über eine separate Gaseinspritzung 201, insbesondere über der an dem Einlasssammler 220 angeschlossenen Gaseinspritzung 201.

Wenngleich hierin spezifische Ausführungsformen dargestellt und beschrieben worden sind, liegt es im Rahmen der vorliegenden Erfindung, die gezeigten Ausführungsformen geeignet zu kombinieren oder zu modifizieren, ohne vom Schutzbereich der vorliegenden Erfindung abzuweichen. Beispielsweise kann die Gemischrückführleitung 122, 322, 422, 522 den Einlassbereich der Hochdruck-Turbine des Hochdruck-Turboladers mit dem Auslassbereich der Hochdruck-Turbine des Hochdruck-Turboladers verbinden. Beispielsweise kann die Gemischrückführleitung 122, 322, 422, 522 den Einlassbereich der Niederdruck-Turbine des Niederdruck-Turboladers mit dem Auslassbereich der Niederdruck-Turbine des Niederdruck-Turboladers verbinden. Beispielsweise kann die Drosseleinrichtung, insbesondere die Drosselklappe, in der Luftansaugvorrichtung vor dem Gasmischer angeordnet sein. Alternativ kann die Drosseleinrichtung, insbesondere die Drosselklappe, beispielsweise in der Leitung zwischen Niederdruck-Verdichter und Hochdruck-Verdichter angeordnet sein. Beispielsweise kann die Gaszuführung, und insbesondere der Gasmischer, in der Leitung zwischen Niederdruck-Verdichter und Hochdruck-Verdichter angeordnet sein.

### Bezugszeichenliste

100, 300, 400, 500 Gemischzuführsystem
110, 310, 410, 510 Aufladesystem
140, 340, 440, 540 Turbolader / Hochdruck-Turbolader
111 Verdichter
112 Turbine
113, 313, 413, 513 Turboladerwelle
114, 314, 414, 514 Gaszuführung
115, 315, 415, 515 Luftansaugvorrichtung
116, 316, 416, 516 Ladeluftkühler
117, 317, 417, 517 Drosselklappe
127, 327, 427, 527 Gasmischer
120, 320, 420, 520 Bypass
121, 124, 321, 324, 421, 424, 521, 524 Bypassventil;
122, 322, 422, 522 Gemischrückführleitung
123, 323, 423, 523 Abgasbypassleitung
200 Verbrennungsmotor
201 Gaseinspritzung
210 Zylinder
220 Einlasssammler
230 Abgassammelleitung
330, 430, 530 Turbolader / Niederdruck-Turbolader
311, 411, 511 Hochdruck-Verdichter
312, 412, 512 Hochdruck-Turbine
318, 418, 518 Zwischenkühler
319, 419, 519 Niederdruck-Verdichter
325, 425, 525 Niederdruck-Turboladerwelle
326, 426, 526 Niederdruck-Turbine

## Patentansprüche

1. Gemischzuführsystem (100, 300, 400, 500) für einen Verbrennungsmotor (200) mit quantitativer Gemischregelung, insbesondere einen Gasmotor oder einen Zweistoffbetriebmotor, das Gemischzuführsystem (100, 300, 400, 500) aufweisend:
ein mit dem Verbrennungsmotor (200) verbindbares Aufladesystem (110, 310, 410, 510), aufweisend einen Bypass (120, 320, 420, 520) und ein im Bypass (120, 320, 420, 520) angeordnetes Bypassventil (121, 124, 321, 324, 421, 424, 521, 524);
einen Ventiltrieb zur periodischen Betätigung eines Einlassventils des Verbrennungsmotors (200), wobei eine Ventilsteuerzeit des Einlassventils durch den Ventiltrieb steuerbar ist;
wobei das Gemischzuführsystem (100, 300, 400, 500) dazu eingerichtet ist,
- bei einem Anstieg einer Motorlast das Bypassventil (121, 124, 321, 324, 421, 424, 521, 524) mindestens teilweise zu schließen und die Ventilsteuerzeit für eine Verlängerung der Ventilöffnungsdauer zu verändern, und während und/oder nach Ablauf einer Ventiltrieblatenzzeit das Bypassventil (121, 124, 321, 324, 421, 424, 521, 524) mindestens teilweise zu öffnen; und/oder
- bei einer Verringerung der Motorlast das Bypassventil (121, 124, 321, 324, 421, 424, 521, 524) mindestens teilweise zu öffnen und die Ventilsteuerzeit für eine Verkürzung der Ventilöffnungsdauer zu verändern, und während und/oder nach Ablauf einer Ventiltrieblatenzzeit das Bypassventil (121, 124, 321, 324, 421, 424, 521, 524) mindestens teilweise zu schließen.

2. Gemischzuführsystem nach Anspruch 1, ferner aufweisend eine Kontrolleinheit, die eingerichtet ist, bei dem Anstieg der Motorlast und/oder bei der Verringerung der Motorlast einen Öffnungsgrad des Bypassventils (121, 124, 321, 324, 421, 424, 521, 524) einzustellen und die Ventilsteuerzeit des Einlassventils durch den Ventiltrieb zu verändern.

3. Gemischzuführsystem nach Anspruch 2, wobei die Kontrolleinheit eingerichtet ist, während und/oder nach Ablauf der Ventiltrieblatenzzeit, in Abhängigkeit eines Brennstoff-Luft-Verhältnisses in einer Brennkammer des Verbrennungsmotor mit quantitativer Gemischregelung (200) den Öffnungsgrad des Bypassventils (121, 124, 321, 324, 421, 424, 521, 524) einzustellen.

4. Gemischzuführsystem nach einem der vorherigen Ansprüche, wobei ein erster Öffnungsgrad des Bypassventils (121, 124, 321, 324, 421, 424, 521, 524) vor dem Anstieg der Motorlast und ein zweiter Öffnungsgrad nach Ablauf der Ventiltrieblatenzzeit im Wesentlichen gleich sind.

5. Gemischzuführsystem nach einem der vorherigen Ansprüche, das Aufladesystem (110, 310, 410, 510) ferner aufweisend mindestens einen Turbolader (330, 430, 530, 140, 340, 440, 540), wobei der Bypass (120, 320, 420, 520) einen Einlassbereich einer Turbine (112, 312, 326, 412, 426, 512, 526) des Turboladers (330, 430, 530, 140, 340, 440, 540) mit einem Auslassbereich der Turbine (112, 312, 326, 412, 426, 512, 526) des Turboladers (330, 430, 530, 140, 340, 440, 540) und/oder einen Auslassbereich eines Verdichters (111, 311, 319, 411, 419, 511, 519) des Turboladers (330, 430, 530, 140, 340, 440, 540) mit einem Einlassbereich des Verdichters (111, 311, 319, 411, 419, 511, 519) des Turboladers (330, 430, 530, 140, 340, 440, 540) verbindet.

6. Gemischzuführsystem nach einem der vorherigen Ansprüche, das Aufladesystem (110, 310, 410, 510) ferner aufweisend mindestens zwei Turbolader (330, 430, 530, 140, 340, 440, 540), wobei der Bypass (120, 320, 420, 520) einen Einlassbereich einer Turbine (112, 312, 326, 412, 426, 512, 526) des ersten Turboladers (330, 430, 530, 140, 340, 440, 540) mit einem Auslassbereich einer Turbine (112, 312, 326, 412, 426, 512, 526) des zweiten Turboladers (330, 430, 530, 140, 340, 440, 540) und/oder einen Auslassbereich eines Verdichters (111, 311, 319, 411, 419, 511, 519) des ersten Turboladers (330, 430, 530, 140, 340, 440, 540) mit einem Einlassbereich eines Verdichters (111, 311, 319, 411, 419, 511, 519) des zweiten Turboladers (330, 430, 530, 140, 340, 440, 540) verbindet.

7. Gemischzuführsystem nach einem der vorherigen Ansprüche, wobei das Bypassventil (121, 124, 321, 324, 421, 424, 521, 524) ein Drosselventil ist und/oder wobei das Bypassventil (121, 124, 321, 324, 421, 424, 521, 524) stufenlos einstellbar ist.

8. Gemischzuführsystem nach einem der vorherigen Ansprüche, wobei der Ventiltrieb zum zeitlichen Verschieben einer Schließbewegung des Einlassventils eingerichtet ist; oder wobei der Ventiltrieb zum zeitlichen Verschieben der Betätigung des Einlassventils eingerichtet ist.

9. Gemischzuführsystem nach Anspruch 8, wobei das zeitliche Verschieben der Schließbewegung des Einlassventils stufenlos einstellbar ist.

10. Gemischzuführsystem nach einem der vorherigen Ansprüche, wobei der Ventiltrieb ferner ein Verzögerungselement zum Verschieben der Schließbewegung des Einlassventils aufweist.

11. Gemischzuführsystem nach Anspruch 10, wobei das Verzögerungselement eine Hydraulikkammer zum Verschieben der Schließbewegung des Einlassventils mittels eines Hydraulikmediums aufweist.

12. Gemischzuführsystem nach einem der vorherigen Ansprüche, wobei das Gemischzuführsystem eingerichtet ist, bei dem Anstieg der Motorlast das Bypassventil (121, 124, 321, 324, 421, 424, 521, 524) in einer ersten Hälfte der Ventiltrieblatenzzeit mindestens teilweise zu schließen; und/oder bei der Verringerung der Motorlast das Bypassventil (121, 124, 321, 324, 421, 424, 521, 524) in der ersten Hälfte der Ventiltrieblatenzzeit mindestens teilweise zu öffnen.

13. Verbrennungsmotor mit quantitativer Gemischregelung (200), aufweisend das Gemischzuführsystem nach einem der vorherigen Ansprüche.

14. Verfahren zum Betreiben eines Gemischzuführsystems (100, 300, 400, 500) für einen Verbrennungsmotor mit quantitativer Gemischregelung (200), aufweisend ein Gemischzuführsystem (100, 300, 400, 500) gemäß einem der der Ansprüche 1 bis 12, das Verfahren aufweisend :
A) Bei dem Anstieg einer Motorlast:
A1) Teilweise Schließen des Bypassventils (121, 124, 321, 324, 421, 424, 521, 524) und Verschieben der Ventilsteuerzeit, um die Ventilöffnungsdauer zu verlängern; und
A2) Teilweise Öffnen des Bypassventils (121, 124, 321, 324, 421, 424, 521, 524) während und/oder nach Ablauf einer Ventiltrieblatenzzeit; und/oder
B) Bei der Verringerung der Motorlast:
B1) Teilweise Öffnen des Bypassventils (121, 124, 321, 324, 421, 424, 521, 524) und Verschieben der Ventilsteuerzeit, um die Ventilöffnungsdauer zu verkürzen; und
B2) Teilweise Schließen des Bypassventils (121, 124, 321, 324, 421, 424, 521, 524) während und/oder nach Ablauf einer Ventiltrieblatenzzeit.

15. Verfahren nach Anspruch 14, wobei Schritte A2) und/oder B2) in Abhängigkeit des Brennstoff-Luft-Verhältnisses eingestellt werden.
